# EUROPÄISCHE PATENTANMELDUNG

(11) **EP 4 585 289 A1**
(43) Veröffentlichungstag der Anmeldung: **16.07.2025**
(21) Anmeldenummer: 24217428.2
(22) Anmeldetag: 04.12.2024
(51) Int. Cl.: B01D 29/11, B01D 35/14, D06F 39/10, C02F 1/00

(54) **FILTERSYSTEM EINES WÄSCHEBEHANDLUNGSGERÄTS SOWIE WÄSCHEBEHANDLUNGSGERÄT**

(30) Priorität: 12.01.2024 DE 102024200272
(71) Anmelder: BSH Hausgeräte GmbH, 81739 München (DE)
(72) Erfinder: Bischof, Andreas, 10407 Berlin (DE); Eglmeier, Hans, 10587 Berlin (DE)

(57) **Zusammenfassung**

Die Erfindung betrifft ein Filtersystem (1) eines Wäschebehandlungsgeräts, umfassend eine Ablaufleitung (2), welche für ein Abführen von Prozessflüssigkeit aus dem Wäschebehandlungsgerät vorgesehen ist, eine Filtereinrichtung (4) und ein Filtergehäuse (3), in welchem die Filtereinrichtung (4) in einer Filtrierposition lösbar platzierbar ist und das einen Zulauf (16) aufweist. Der Zulauf (16) mündet in einem Innenbereich (19), in welchem das Filtergehäuse (3) und die Filtereinrichtung (4) bei Platzierung der Filtereinrichtung (4) in ihrer Filtrierposition eine zwischenliegende Kammer (25) einschließen, wobei in der Kammer (25) bei Platzierung der Filtereinrichtung (4) in ihrer Filtrierposition dann zudem eine Einströmseite (22) der Filtereinrichtung (4) mündet. Die Ablaufleitung (2) ist mit einem Leitungsende (5) lösbar an dem Zulauf (16) des Filtergehäuses (3) anschließbar, wobei an dem Leitungsende (5) ein Ventil (9) untrennbar vorgesehen ist, welches in einem Zustand, in welchem das Leitungsende (5) an dem Zulauf (16) angeschlossen und gleichzeitig die Filtereinrichtung (4) in der Filtrierposition platziert ist, in einen ersten Schaltzustand überführt ist, in welchem ein Strömen von Prozessflüssigkeit aus dem Leitungsende (5) über das Ventil (9) zu dem Zulauf (16) darstellbar ist. Bei fehlendem Vorliegen dieses Zustands nimmt das Ventil (9) selbsttätig einen zweiten Schaltzustand ein, in dem ein Strömen von Prozessflüssigkeit aus dem Leitungsende (5) über das Ventil (9) unterbunden ist.

## Beschreibung

Die Erfindung betrifft ein Filtersystem eines Wäschebehandlungsgeräts, umfassend eine Ablaufleitung, welche für ein Abführen von Prozessflüssigkeit aus dem Wäschebehandlungsgerät vorgesehen ist, eine Filtereinrichtung und ein Filtergehäuse, in welchem die Filtereinrichtung in einer Filtrierposition lösbar platzierbar ist und das einen Zulauf aufweist, wobei der Zulauf in einem Innenbereich mündet, in welchem das Filtergehäuse und die Filtereinrichtung bei Platzierung der Filtereinrichtung in ihrer Filtrierposition eine zwischenliegende Kammer einschließen, und wobei in der Kammer bei Platzierung der Filtereinrichtung in ihrer Filtrierposition dann zudem eine Einströmseite der Filtereinrichtung mündet. Des Weiteren betrifft die Erfindung ein Wäschebehandlungsgerät mit einem vorgenannten Filtersystem.

Aufgrund der zunehmenden Belastung der Umwelt mit Mikroplastik werden unterschiedlichste Maßnahmen ergriffen, um Mikroplastik zu reduzieren oder zu vermeiden. Im Bereich moderner Wäschebehandlungsgeräte werden dazu häufig Filtersysteme vorgesehen, über welche bei dem jeweiligen Wäschebehandlungsgerät Mikroplastik aus abzupumpender Prozessflüssigkeit abgeschieden werden kann. Hierdurch kann beim Waschen synthetischer Kleidung eine Belastung des Abwassers mit Mikroplastik reduziert werden.

Aus der EP 3 988 698 A1 geht ein Wäschebehandlungsgerät hervor, bei welchem ein Filtersystem zum Filtern von Prozessflüssigkeit vorgesehen ist, um neben Schmutz auch Mikrofasern und Mikropartikel aus der Prozessflüssigkeit abscheiden zu können. Das Filtersystem verfügt dabei über ein Filtergehäuse, in welchem eine Filtereinrichtung in einer Filtrierposition aufgenommen werden kann, wobei das Filtergehäuse zudem mit einem Deckel ausgestattet ist, um die Filtereinrichtung herausziehen und leicht reinigen und warten zu können. Neben einem Ablauf, über welchen gereinigte Prozessflüssigkeit aus dem Filtergehäuse abgeführt werden kann, ist das Filtergehäuse zudem noch mit einem Zulauf ausgestattet, an welchem eine Ablaufleitung für die Zuleitung der Prozessflüssigkeit zum Filtergehäuse anzuschließen ist und der in einem Innenbereich des Filtergehäuses mündet. In diesem Innenbereich schließen dabei das Filtergehäuse und die in ihrer Filtrierposition platzierte Filtereinrichtung eine zwischenliegende Kammer ein.

Ausgehend vom vorstehend beschriebenen Stand der Technik ist es nun die Aufgabe der vorliegenden Erfindung ein Filtersystem eines Wäschebehandlungsgeräts zu schaffen, wobei bei diesem Filtersystem permanent eine sachgerechte Verwendung sichergestellt ist.

Diese Aufgabe wird ausgehend vom Oberbegriff des Anspruchs 1 in Verbindung mit dessen kennzeichnenden Merkmalen gelöst. Die hierauf folgenden, abhängigen Ansprüche geben jeweils vorteilhafte Weiterbildungen der Erfindung wieder. Ein Wäschebehandlungsgerät, welches mit einem erfindungsgemäßen Filtersystem ausgestattet ist, ist ferner Gegenstand von Anspruch 11.

Gemäß der Erfindung umfasst ein Filtersystem eines Wäschebehandlungsgeräts eine Ablaufleitung, welche für ein Abführen von Prozessflüssigkeit aus dem Wäschebehandlungsgerät vorgesehen ist, eine Filtereinrichtung und ein Filtergehäuse, in welchem die Filtereinrichtung in einer Filtrierposition lösbar platziert werden kann und das einen Zulauf aufweist. Dabei mündet der Zulauf in einem Innenbereich, in welchem das Filtergehäuse und die Filtereinrichtung bei Platzierung der Filtereinrichtung in ihrer Filtrierposition eine zwischenliegende Kammer einschließen. Zudem mündet in der Kammer bei Platzierung der Filtereinrichtung in ihrer Filtrierposition dann auch eine Einströmseite der Filtereinrichtung.

Das erfindungsgemäße Filtersystem dient einem Filtern von Prozessflüssigkeit eines Wäschebehandlungsgeräts, bei welchem es sich insbesondere um eine Waschmaschine oder einen Waschtrockner handelt. Insbesondere ist das Filtersystem dabei in einem Abpumpsystem angeordnet, über welches ein Abführen von Prozessflüssigkeit aus dem Wäschebehandlungsgerät vorgenommen werden kann. Dabei handelt es sich bei der Prozessflüssigkeit bevorzugt um Wasser oder Waschlauge. Ganz besonders bevorzugt ist das erfindungsgemäße Filtersystem dazu ausgestaltet, synthetische Mikropartikel oder - fasern aus der Prozessflüssigkeit abzuscheiden, wobei es sich bei den Mikropartikeln oder -fasern dann insbesondere um Mikroplastik handelt.

Das Filtersystem verfügt über ein Filtergehäuse, in welchem eine Filtereinrichtung in einer Filtrierposition aufgenommen werden kann, wobei dies lösbar erfolgt, d.h. die Filtereinrichtung kann aus dem Filtergehäuse auch aus der Filtrierposition entnommen werden, um beispielsweise einen Austausch der Filtereinrichtung oder eine Reinigung derselbigen vornehmen zu können. Zur Aufnahme der Filtereinrichtung in der Filtrierposition weist das Filtergehäuse insbesondere einen Innenraum auf, in welchem die Filtereinrichtung bei Platzierung in ihrer Filtrierposition bevorzugt vollständig aufgenommen ist. Ganz besonders bevorzugt bildet das Filtergehäuse dabei auf Seiten des Innenraums eine Anschlussstelle aus, an welcher die Filtereinrichtung bei Einnahme ihrer Filtrierposition angeordnet wird. Diese Anschlussstelle liegt insbesondere als Aufnahmeflansch vor, auf welchen die Filtereinrichtung bevorzugt mit einem Filteranschluss aufgeschoben wird.

Des Weiteren weist das Filtergehäuse einen Zulauf auf, welcher in einem Innenbereich mündet. Dabei mündet dieser Zulauf bei dem Filtergehäuse innen in einem Bereich, in welchem das Filtergehäuse und die Filtereinrichtung bei ihrer Platzierung in ihrer Filtrierposition zwischenliegend eine Kammer definieren. Insofern kann über den Zulauf eine Zuführung von Prozessflüssigkeit in diese Kammer erfolgen, welche in dem Innenraum des Filtergehäuses zwischen Filtergehäuse und Filtereinrichtung begrenzt ist. Ist die Filtereinrichtung dabei in ihrer Filtrierposition im Filtergehäuse angeordnet, so mündet außerdem noch eine Einströmseite in dieser Kammer, wodurch aus der Kammer über den Zulauf zugeführte Prozessflüssigkeit im Weiteren dann auch zur Einströmseite der Filtereinrichtung gelangen kann.

Der Zulauf des Filtergehäuses ist insbesondere durch eine Öffnung im Filtergehäuse gebildet, über welche ein Austausch zwischen einer Außenseite des Filtergehäuses und dem Innenraum des Filtergehäuses vorgenommen werden kann. Die Einströmseite der Filtereinrichtung ist bevorzugt eine Seite der Filtereinrichtung, zu welcher zu filternde Flüssigkeit zu führen ist. Wird also in der Filtrierposition der Filtereinrichtung Prozessflüssigkeit in die zwischen dem Filtergehäuse und der Filtereinrichtung eingeschlossene Kammer und damit auch zur Einströmseite der Filtereinrichtung geleitet, so kann über die Filtereinrichtung im Folgenden eine Filtration der hierhin geleiteten Prozessflüssigkeit stattfinden.

Die Filtereinrichtung umfasst für die Filterung der Prozessflüssigkeit mindestens ein Filterelement, wobei hierbei ein oder mehrere Filterelemente vorgesehen sein können, die jeweils für eine Filtration der Prozessflüssigkeit vorgesehen sind. Dabei können mehrere Filterelemente unterschiedliche Feinheiten aufweisen und in Reihe hintereinanderliegend in der Filtereinrichtung vorgesehen sein, so dass stufenweise ein Abscheiden von Partikeln unterschiedlicher Größe stattfindet. Bevorzugt weist die Filtereinrichtung aber genau ein Filterelement auf. Insbesondere liegt das eine Filterelement oder liegen die mehreren Filterelemente dabei jeweils zudem als Mikrofilter vor, über welchen das Abscheiden von Mikropartikeln oder -fasern und hierbei insbesondere Mikroplastik aus der zu filternden Prozessflüssigkeit vorgenommen werden kann.

Die Erfindung umfasst nun die technische Lehre, dass die Ablaufleitung mit einem Leitungsende lösbar an dem Zulauf des Filtergehäuses angeschlossen werden kann. Des Weiteren ist an dem Leitungsende ein Ventil untrennbar vorgesehen, welches in einem Zustand, in welchem das Leitungsende an dem Zulauf angeschlossen und gleichzeitig die Filtereinrichtung in der Filtrierposition platziert ist, in einen ersten Schaltzustand überführt ist, in welchem ein Strömen von Prozessflüssigkeit aus dem Leitungsende über das Ventil zu dem Zulauf dargestellt werden kann. Bei fehlendem Vorliegen dieses Zustands nimmt das Ventil hingegen selbsttätig einen zweiten Schaltzustand ein, in dem ein Strömen von Prozessflüssigkeit aus dem Leitungsende über das Ventil unterbunden ist.

Mit anderen Worten können also die Ablaufleitung und der Zulauf des Filtergehäuses lösbar miteinander verbunden werden, wobei die Verbindung dabei seitens der Ablaufleitung an einem Leitungsende hergestellt wird, an dem zudem ein Ventil unlösbar angeordnet ist. Das Ventil kann zwischen einem ersten Schaltzustand und einem zweiten Schaltzustand umgeschaltet werden, wobei der erste Schaltzustand dann bei dem Ventil eingestellt ist, wenn die Filtereinrichtung in der Filtrierposition platziert und zeitgleich das Leitungsende der Ablaufleitung an dem Zulauf des Filtergehäuses angeschlossen ist. Dabei kann in dem ersten Schaltzustand des Ventils ein Strömen von Prozessflüssigkeit aus dem Leitungsende in den Zulauf des Filtergehäuses vollzogen werden. Ist hingegen die Filtereinrichtung aus der Filtrierposition entnommen oder die Ablaufleitung nicht mit ihrem Leitungsende an dem Zulauf des Filtergehäuses angeschlossen oder liegt sowohl die Entnahme der Filtereinrichtung aus der Filtrierposition, als auch der fehlende Anschluss der Ablaufleitung mit dem Leitungsende an dem Zulauf des Filtergehäuses vor, so nimmt das Ventil von selbst den zweiten Schaltzustand ein, in welchem dann kein Strömen von Prozessflüssigkeit aus dem Leitungsende stattfinden kann.

Eine derartige Ausgestaltung einer Filtereinrichtung hat dabei den Vorteil, dass bei Entnahme der Filtereinrichtung aus der Filtrierposition oder einer unsachgemäßen Anordnung der Filtereinrichtung abseits der korrekten Filtrierposition und/oder bei fehlendem oder unsachgemäßem Anschluss der Ablaufleitung am Zulauf ein Abführen von Prozessflüssigkeit über die Ablaufleitung verhindert wird, da sich das Ventil dann selbsttätig in seinem zweiten Schaltzustand befindet. Hierdurch wird insgesamt eine sachgerechte Verwendung des Filtersystems dahingehend erzwungen, dass zum einen die Ablaufleitung ordnungsgemäß am Zulauf des Filtergehäuses angeschlossen sowie zum anderen die Filtereinrichtung in der Filtrierposition platziert sein muss. Ansonsten kommt es im Betrieb eines das erfindungsgemäße Filtersystem aufweisenden Wäschebehandlungsgeräts dann beim Abpumpen von Prozessflüssigkeit zu Fehlern, weil das Abpumpen über das dann im zweiten Schaltzustand befindliche Ventil des Filtersystems verhindert wird. Da dann zudem der Laugenbehälter mit Wasser und Wäsche gefüllt ist, kann in das Wäschebehandlungsgerät eingebrachte Wäsche wegen des hohen Wasserstands auch nicht entnommen werden. Somit wird eine Bedienperson des Wäschebehandlungsgerät auf den nicht ordnungsgemäßen Zustand des Filtersystems aufmerksam gemacht. Dies lässt sich hierbei mit niedrigem Aufwand realisieren.

Im Rahmen der Erfindung könnte aber auch eine zusätzliche Überprüfung einer ordnungsgemäßen Platzierung der Filtereinrichtung im Filtergehäuse in der Filtrierposition und/oder eines ordnungsgemäßen Anschlusses der Ablaufleitung am Zulauf des Filtergehäuses über je einen Sensor und/oder Schalter erfolgen. Alternativ oder ergänzend dazu wäre es auch denkbar, dass dies im Rahmen eines Prüfzyklus ermittelt wird. So könnte hierbei beispielsweise eine definierte (kleine) Wassermenge über das Filtersystem geführt werden, um zu prüfen, ob das Ventil offen oder geschlossen ist. Dazu kann bei dem Wäschebehandlungsgerät gezielt eine entsprechende Wassermenge eingebracht und abgepumpt werden oder aber eine abzupumpende Wassermenge ist noch aus einer vorhergehenden Wäschebehandlung vorhanden.

Im Rahmen der Erfindung ist unter "untrennbar" zu verstehen, dass die jeweilige Befestigung nicht ohne Werkzeug oder Gewaltanwendung getrennt werden kann, also im Allgemeinen irreversibel ist. Dagegen handelt es sich bei der lösbaren Platzierung der Filtereinrichtung am Filtergehäuse bzw. bei dem lösbaren Anschluss der Ablaufleitung an dem Zulauf des Filtergehäuses jeweils um eine Verbindung, die trennbar ist, also bei Bedarf reversibel getrennt werden kann.

Im Zuge der Platzierung der Filtereinrichtung im Filtergehäuse in der Filtrierposition wird insbesondere zudem beim Einschließen der zwischenliegenden Kammer eine dichte Verbindung zwischen dem Filtergehäuse und der Filtereinrichtung ausgebildet, um bei Platzierung der Filtereinrichtung in der Filtrierposition eine Leckage von Prozessflüssigkeit aus der Kammer an der Filtereinrichtung vorbei zu vermeiden und damit einen Übertritt von ungefilterter Prozessflüssigkeit zu verhindern. Alternativ, bevorzugt aber ergänzend dazu wird zudem auch beim Anschluss der Ablaufleitung mit dem Leitungsende an dem Zulauf des Filtergehäuses eine dichte Verbindung zwischen der Ablaufleitung und dem Filtergehäuse realisiert, so dass auch hier Leckage vermieden werden kann. Insbesondere ist dazu jeweils mindestens ein Dichtelement vorgesehen, welches jeweils seitens eines der beiden Verbindungspartner angeordnet ist und beim Herstellen der Verbindung die Abdichtung vornimmt. Das mindestens eine Dichtelement kann dabei beispielsweise als O-Ring gestaltet sein.

Ferner wird im Zuge der Platzierung der Filtereinrichtung in der Filtrierposition bevorzugt eine lösbare Befestigung zwischen der Filtereinrichtung und dem Filtergehäuse ausgebildet, d.h. das Filtergehäuse und die Filtereinrichtung werden lösbar aneinander fixiert. Alternativ oder ergänzend dazu wird zudem beim Anschluss der Ablaufleitung an dem Filtergehäuse eine lösbare Befestigung verwirklicht. Hierbei wird diese jeweilige lösbare Verbindung bzw. Befestigung insbesondere durch axiales Fixieren der einen Komponente an der anderen Komponente realisiert, wobei das axiale Fixieren bevorzugt durch ein Gewinde, magnetisch, über eine Klemmung, über erhöhte Reibung (z.B. durch einen Gummiring/Gummitülle), über einen Bajonettverschluss, oder über zusätzliche Verbindungselemente wie Schrauben, Klemmen, Spannelemente etc. hergestellt wird.

Dass das Ventil bei fehlendem Vorliegen des Zustands "selbsttätig" den zweiten Schaltzustand einnimmt, bedeutet im Sinne der Erfindung, dass die Überführung des Ventils in seinen zweiten Schaltzustand bei fehlendem Vorliegen des Zustands von selbst auftritt, also nicht aktiv durch eine Steuerung oder Regelung und eine entsprechende Aktuatorik herbeizuführen ist. Insbesondere ist das Ventil in seinen zweiten Schaltzustand vorgespannt, wobei diese Vorspannung dann bei Vorliegen des geforderten Zustands, nämlich dem Anschluss des Leitungsendes an dem Zulauf und der gleichzeitigen Platzierung der Filtereinrichtung in der Filtrierposition, überwunden wird. Besonders bevorzugt wird die Vorspannung in den zweiten Schaltzustand dabei über ein Federelement realisiert.

Entsprechend einer Ausführungsform der Erfindung ist dem am Leitungsende vorgesehenen Ventil ein Auslöseelement zugeordnet, welches an der Filtereinrichtung vorgesehen ist, wobei das Auslöseelement bei Anschluss des Leitungsendes an dem Zulauf und bei gleichzeitiger Platzierung der Filtereinrichtung in der Filtrierposition unmittelbar oder mittelbar auf das Ventil einwirkt und das Ventil dabei aus dem zweiten Schaltzustand in den ersten Schaltzustand überführt. Hierdurch kann auf einfache Art und Weise die Überführung des Ventils in den ersten Schaltzustand bei Anschluss des Leitungsendes an dem Zulauf und bei gleichzeitiger Platzierung der Filtereinrichtung in der Filtrierposition realisiert werden. Hierbei kann das Auslöseelement vertikal oder horizontal oder schräg einwirken. Das Auslöseelement ist hierbei bevorzugt durch die Filtereinrichtung selbst oder durch ein hieran befestigtes Bauteil gebildet und somit insbesondere feststehend.

Gemäß einer hierzu alternativen und ergänzenden Ausgestaltungsmöglichkeit der Erfindung ist an dem Zulauf ein weiteres Ventil vorgesehen, welches bei Platzierung der Filtereinrichtung in der Filtrierposition in einen Schaltzustand überführt ist, in welchem ein Strömen von Prozessflüssigkeit über den Zulauf dargestellt werden kann, wohingegen das weitere Ventil bei fehlender Platzierung der Filtereinrichtung in der Filtrierposition selbsttätig einen zweiten Schaltzustand einnimmt, in dem ein Strömen von Prozessflüssigkeit über den Zulauf über das weitere Ventil unterbunden ist. Eine derartige Ausgestaltung hat dabei den Vorteil, dass über das weitere Ventil dann auch ein verschlossener Zustand des Zulaufs des Filtergehäuses erreicht wird, wenn die Filtereinrichtung aus der Filtrierposition entnommen ist. Hierdurch kann ein Auslaufen von in dem Filtergehäuse befindlicher Restflüssigkeit verhindert werden, wenn das Filtergehäuse bei bereits entnommener Filtereinrichtung zudem vom Ablaufschlauch getrennt wird. Bevorzugt ist das weitere Ventil dabei untrennbar am Zulauf angeordnet.

Bei Kombination der beiden vorgenannten Varianten tritt das an dem Filterelement vorgesehene Auslöseelement bei Platzierung der Filtereinrichtung in der Filtrierposition mit dem weiteren Ventil in Kontakt und überführt das weitere Ventil hierdurch aus seinem zweiten Schaltzustand in seinen ersten Schaltzustand. Dabei ist das weitere Ventil mit einem weiteren Auslöseelement ausgestattet, welches bei Überführung des weiteren Ventils in seinen ersten Schaltzustand und bei Anschluss des Leitungsendes der Ablaufleitung an dem Zulauf mit dem am Leitungsende vorgesehenen Ventil in Kontakt tritt und das am Leitungsende vorgesehene Ventil aus seinem zweiten Schaltzustand in seinen ersten Schaltzustand überführt. Hierdurch kann eine mechanische Betätigung der beiden Ventile bei Herstellung des geforderten Zustands auf einfache Art und Weise gestaltet werden.

Neben dem rein mechanischen Öffnen des jeweiligen Ventils durch das jeweilige Auslöseelement kann im Rahmen der Erfindung aber auch zusätzlich ein elektrischer Schalter und/oder Sensor vorgesehen sein, um zum Beispiel Signale an eine Bedienperson und/oder ein das Filtersystem aufweisendes Wäschebehandlungsgerät zu senden und damit die ordnungsgemäße oder fehlende Platzierung der Filtereinrichtung in der Filtrierposition und/oder den ordnungsgemäßen oder fehlenden Anschluss des Leitungsendes an dem Zulauf aufzuzeigen.

Das jeweilige Ventil und das jeweilige Auslöseelement können im Rahmen der Erfindung jeweils einen speziellen Querschnitt oder jeweils eine spezielle Kontur aufweisen, so dass das jeweilige Ventil nur mit dem entsprechend gestalteten Gegenstück in Form des zugehörigen Auslöseelements und umgekehrt nutzbar ist.

In Weiterbildung der vorgenannten Ausführungsform weist das jeweilige Ventil jeweils einen Ventilkörper auf, welcher zwischen je einer ersten, dem je einen ersten Schaltzustand zugeordneten Stellung und je einer zweiten, dem je einen zweiten Schaltzustand zugeordneten Stellung bewegt werden kann. Der jeweils eine Ventilkörper unterbindet in der zweiten Stellung das Strömen von Flüssigkeit über das jeweilige Ventil, während in der je einen ersten Stellung des jeweils einen Ventilkörpers das Strömen von Flüssigkeit über das jeweilige Ventil dargestellt werden kann. Hierdurch wird ein geeigneter Aufbau des jeweiligen Ventils realisiert. Eine Positionierung des jeweils einen Ventilkörpers in der zweiten Stellung kann dabei über ein Federelement oder auch mittels eines Magneten verwirklicht bzw. unterstützt sein, welcher den jeweils einen Ventilkörper in der zweiten Stellung hält. Besonders bevorzugt liegt der jeweils eine Ventilkörper in der zweiten Stellung an jeweils einem zugehörigen Ventilsitz an und unterbindet dadurch das Strömen von Flüssigkeit über das jeweilige Ventil. In der je einen ersten Stellung ist der jeweils eine Ventilkörper dann aus dem jeweils einen zugehörigen Ventilsitz herausbewegt, wodurch das Strömen von Flüssigkeit über das jeweilige Ventil dargestellt werden kann.

Bevorzugt kann der jeweils eine Ventilkörper in Strömungsrichtung von über das jeweilige Ventil geführter Flüssigkeit zwischen der je einen ersten Stellung und der je einen zweiten Stellung bewegt werden. Dies ermöglicht einen kompakten Aufbau des jeweiligen Ventils.

Alternativ dazu liegt die je eine erste Stellung des jeweils einen Ventilkörpers hinsichtlich einer Strömungsrichtung von über das jeweilige Ventil geführter Flüssigkeit seitlich versetzt zu der je einen zweiten Stellung. Hierdurch kann jeweils ein Ventil verwirklicht werden, welches unempfindlicher gegenüber in der Flüssigkeit vorhandenen Verschmutzungen, wie beispielsweise Flusen, ist, da durch die somit seitliche Positionierung des Ventilkörpers in der ersten Stellung beim Strömen von Flüssigkeit über das jeweilige Ventil weniger Verschmutzungen an dem Ventilkörper hängen bleiben können.

Weiter alternativ ist der jeweils eine Ventilkörper je ein Ventilschieber, welcher quer zu einer Strömungsrichtung von über das jeweilige Ventil geführter Prozessflüssigkeit zwischen der je einen ersten Stellung und der je einen zweiten Stellung verschiebbar ist. Über einen Ventilschieber kann dabei ein zuverlässiges Verschließen in der je einen zweiten Stellung realisiert werden.

Es ist eine alternative Weiterbildung der Ausführungsform, dass das jeweilige Ventil jeweils einen Ventilkörper aufweist, der mit je einem Durchbruch durchsetzt ist, wobei der jeweils eine Ventilkörper zwischen je einer ersten, dem je einen ersten Schaltzustand zugeordneten Stellung und je einer zweiten, dem je einen zweiten Schaltzustand zugeordneten Stellung verdrehbar ist. Der jeweils eine Ventilkörper trennt in der je einen zweiten Stellung einen Zulauf und einen Ablauf des jeweiligen Ventils voneinander und unterbindet hierdurch das Strömen von Flüssigkeit über das jeweilige Ventil, wohingegen der je eine Durchbruch des jeweils einen Ventilkörpers in der je einen ersten Stellung mit dem Zulauf und dem Ablauf in Überdeckung gebracht ist und dadurch das Strömen von Flüssigkeit über das jeweilige Ventil dargestellt werden kann.

Weiter alternativ weist das jeweilige Ventil jeweils einen Ventilkolben auf, der zwischen je einer ersten, dem je einen ersten Schaltzustand zugeordneten Stellung und je einer zweiten, dem je einen zweiten Schaltzustand zugeordneten Stellung verschoben werden kann, wobei der jeweils eine Ventilkolben in der je einen zweiten Stellung auf je ein elastisches Element des jeweiligen Ventils drückt, welches sich dadurch elastisch verformt. Das je eine elastische Element trennt in dem verformten Zustand einen Zulauf und einen Ablauf des jeweiligen Ventils voneinander und unterbindet hierdurch das Strömen von Flüssigkeit über das jeweilige Ventil, wohingegen der Zulauf und der Ablauf in einem unverformten Zustand des je einen elastischen Elements miteinander verbunden sind und dadurch das Strömen von Flüssigkeit über das jeweilige Ventil darstellbar ist. Hierdurch kann ein sogenanntes Quetschventil (pinch valve) realisiert werden. Der gedrückte Zustand des elastischen Elements kann direkt mechanisch oder auch mittels eines Mediums (z.B. eines Fluides) erfolgen.

Es ist eine weitere Ausführungsform der Erfindung, dass das Filtergehäuse mit einem Deckel versehen ist, welcher mit mindestens einem Betätigungselement ausgestattet ist und zwischen einem geöffneten Zustand und einer Schließstellung überführt werden kann. Dabei ist die Filtereinrichtung bei Anordnung innerhalb des Filtergehäuses über den Deckel nur bei dessen Platzierung in der Schließstellung durch das mindestens eine Betätigungselement des Deckels in die Filtrierposition bewegt. Da sich die Filtereinrichtung somit abseits der Schließstellung nicht in der Filtrierposition befindet, findet bei einem unvollständigen Schließen des Filtergehäuses auch ein Verschließen des Leitungsendes über das Ventil statt. Somit kann dieses unvollständige Schließen des Filtergehäuses auf einfache Art und Weise erkennbar gemacht und damit ein Auslaufen der Prozessflüssigkeit aus dem Filtergehäuse unterbunden werden.

In Weiterbildung der vorgenannten Ausführungsform ist die Filtereinrichtung bei Anordnung innerhalb des Filtergehäuses über mindestens ein Federelement in Richtung des Deckels vorgespannt. Hierdurch sorgt die Filtereinrichtung beim unvollständigen Überführen des Deckels in seine Schließstellung dann auch sicher für einen erkennbaren geöffneten Zustand des Deckels. Bei dem mindestens einen Federelement kann es sich dabei um ein separates Federelement oder ein Federelement des Ventils und/oder des weiteren Ventils handeln.

Alternativ oder ergänzend dazu ist das mindestens eine Betätigungselement als je ein Nocken ausgeführt, welcher jeweils gegenüber dem restlichen Deckel in der Schließstellung in Richtung eines Innenraums des Filtergehäuses vorsteht. Über diesen je eine Nocken kann dabei die Überführung der Filtereinrichtung in ihre Filtrierposition in der Schließstellung des Deckels auf einfache Art und Weise mechanisch realisiert werden.

Weiter alternativ oder ergänzend ist eine einem Innenraum des Filtergehäuses in der Schließstellung zugewandte Seite des Deckels optisch auffällig gestaltet, insbesondere mit einer Signalfarbe versehen. In vorteilhafter Weise kann hierdurch ein geöffneter Zustand des Deckels durch eine Bedienperson optisch einfach erfasst werden.

Gemäß einer Ausgestaltungsmöglichkeit der Erfindung ist das Filtergehäuse in einem Gerätegehäuse des Wäschebehandlungsgeräts aufgenommen und die Ablaufleitung eine Abpumpleitung des Wäschebehandlungsgeräts. Alternativ dazu ist das Filtergehäuse außenliegend zu einem Gerätegehäuse des Wäschebehandlungsgeräts angeordnet und die Ablaufleitung ein außerhalb des Gerätegehäuses verlaufender Abpumpschlauch oder eine innerhalb des Gerätegehäuses vorgesehene Abpumpleitung des Wäschebehandlungsgeräts.

Gegenstand Erfindung ist zudem ein Wäschebehandlungsgerät, welches ein Filtersystem nach einem oder mehreren der vorstehend beschriebenen Varianten aufweist. Konkret kann es sich bei dem Wäschebehandlungsgerät dabei um eine Waschmaschine oder einen Waschtrockner handeln.

Vorteilhafte Ausführungsformen der Erfindung, die nachfolgend erläutert werden, sind in den Zeichnungen dargestellt. Es zeigt:
- Fig. 1: eine schematische Ansicht eines Teils eines Filtersystems entsprechend einer Ausführungsform der Erfindung;
- Fig. 2: eine schematische Darstellung eines Filtersystems gemäß einer weiteren Ausgestaltungsmöglichkeit, gezeigt in einem ersten Zustand;
- Fig. 3: das Filtersystem aus Fig. 2, gezeigt in einem zweiten Zustand;
- Fig. 4: eine schematische Ansicht eines Teils eines Filtersystems entsprechend einer weiteren Ausführungsform der Erfindung, gezeigt in einem ersten Zustand;
- Fig. 5: das Filtersystem aus Fig. 4, gezeigt in einem zweiten Zustand;
- Fig. 6: eine schematische Darstellung eines Filtersystems gemäß einer weiteren Ausgestaltungsmöglichkeit der Erfindung, gezeigt in einem ersten Zustand;
- Fig. 7: das Filtersystem aus Fig. 6, gezeigt in einem zweiten Zustand; und
- Fig. 8 bis 10: schematische Darstellungen je eines Wäschebehandlungsgerät mit je einem erfindungsgemäßen Filtersystem.

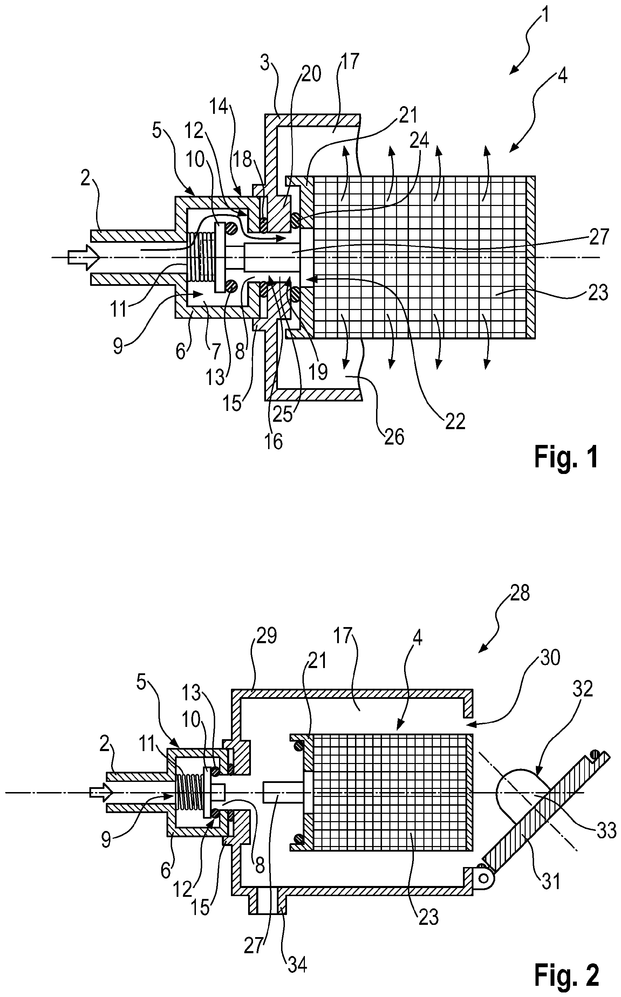

Aus Fig. 1 geht eine schematische Ansicht eines Filtersystems 1 entsprechend einer Ausführungsform der Erfindung hervor. Das Filtersystem 1 umfasst dabei eine Ablaufleitung 2, ein Filtergehäuse 3 und eine Filtereinrichtung 4, wobei die Ablaufleitung 2 dabei an einem Leitungsende 5 ein Anschlussstück 6 aufweist, welches zum einen einen Ventilraum 7 definiert sowie zum anderen mit einem Auslass 8 ausgestattet ist. Die Ablaufleitung 2 ist dabei dafür vorgesehen, Prozessflüssigkeit im Zuge eines Abpumpens aus einem Wäschebehandlungsgerät abzuführen, wozu die Ablaufleitung 2 an einem zum Leitungsende 5 entgegengesetzt liegenden Ende untrennbar mit einem Abpumpsystem des Wäschebehandlungsgerät verbunden ist. Bei der Prozessflüssigkeit handelt es sich dabei um Wasser oder Waschlauge.

In dem Ventilraum 7 ist die Ablaufleitung 2 mit einem Ventil 9 ausgestattet, welches untrennbar mit der Ablaufleitung 2 verbunden ist und einen Ventilkörper 10 aufweist, der über ein Federelement 11 in Richtung eines Ventilsitzes 12 vorgespannt ist. Der Ventilsitz 12 ist hierbei radial umliegend zu dem Auslass 8 ausgestaltet, wobei der Ventilkörper 10 zudem auf einer dem Ventilsitz 12 zugewandten Seite mit einem Dichtelement 13 in Form eines O-Rings ausgestattet ist.

Radial außen bildet das Anschlussstück 6 der Ablaufleitung 2 einen Anschlussabschnitt 14, mit welchem die Ablaufleitung 2 an ihrem Leitungsende 5 an einem Anschlussflansch 15 des Filtergehäuses 3 lösbar axial befestigt werden kann. Dabei kann diese Befestigung über Gewinde an Anschlussabschnitt 14 und am Anschlussflansch 15 hergestellt oder nach Art eines Bajonettverschlusses verwirklicht sein. Der Anschlussflansch 15 ist bei dem Filtergehäuse 3 dabei radial umliegend zu einem Zulauf 16 ausgestaltet, über welchen bei dem Filtergehäuse 3 einer Außenseite des Filtergehäuses 3 mit einem Innenraum 17 des Filtergehäuses 3 verbunden ist. Ebenfalls radial umliegend zu dem Zulauf 16 ist auf Seiten des Anschlussflansches 15 ein Dichtelement 18 am Filtergehäuse 3 aufgenommen, wobei dieses Dichtelement 18 dabei als O-Ring gestaltet ist.

Auf Seiten des Innenraumes 17 mündet der Zulauf 16 in einem Innenbereich 19, in welchem die Filtereinrichtung 4 im Filtergehäuse 3 in einer, in Fig. 1 gezeigten Filtrierposition lösbar platziert werden kann. Dazu definiert das Filtergehäuse 3 auf Seiten des Innenraums 17 einen Aufnahmeflansch 20, auf welchen die Filtereinrichtung 4 bei ihrer Platzierung in der Filtrierposition mit einem Filteranschluss 21 aufgeschoben wird. Der Filteranschluss 21 bildet außerdem eine Einströmseite 22, an welcher Flüssigkeit in ein Filterelement 23 der Filtereinrichtung 4 einströmen kann, wobei über das Filterelement 23 dabei Mikropartikel aus der an der Einströmseite 22 zugeführten Flüssigkeit abgeschieden werden können.

Wie zudem in Fig. 1 zu erkennen ist, ist an dem Filteranschluss 21 zudem radial umliegend zu der Einströmseite 22 ein Dichtelement 24 aufgenommen, welches bei Platzierung der Filtereinrichtung 4 in der Filtrierposition eine Kammer 25 gegenüber einer Kammer 26 abdichtet. Während die Kammer 25 dabei zwischen der Mündung des Zulaufs 16 im Innenbereich 19 und der Einströmseite 22 zwischen Filtergehäuse 3 und Filtereinrichtung 4 eingeschlossen ist, liegt die Kammer 26 umliegend der Filtereinrichtung 4 zwischen der Filtereinrichtung 4 und dem Filtergehäuse 3.

An dem Filteranschluss 21 ist die Filtereinrichtung 4 zudem radial innen liegend der Einströmseite 22 mit einem axial vorstehenden Auslöseelement 27 ausgestattet. Über dieses Auslöseelement 27 wird der Ventilkörper 10 bei Vorliegen des in Fig. 1 gezeigten Zustands, in welchem das Leitungsende 5 mit dem Anschlussstück 6 an dem Zulauf 16 des Filtergehäuses 3 angeschlossen und gleichzeitig die Filtereinrichtung 4 in der Filtrierposition im Filtergehäuse 3 platziert ist, aus dem Ventilsitz 12 entgegen dem Federelement 11 herausbewegt und dadurch der in Fig. 1 gezeigte Schaltzustand des Ventils 9 dargestellt. In diesem Schaltzustand ermöglicht das Ventil 9 eine Zuführung von Prozessflüssigkeit aus der Ablaufleitung 2 über den Auslass 8 zum Zulauf 16 des Filtergehäuses 3 und im Weiteren dann auch aus diesem zur Einströmseite 22 des Filterelements 4. In der Folge wird die zugeführte Prozessflüssigkeit über das Filterelement 23 der Filtereinrichtung 4 gefiltert, bevor die gefilterte Prozessflüssigkeit in die Kammer 26 gelangt. Aus dieser Kammer 26 kann die gefilterte Prozessflüssigkeit dann über einen - vorliegend nicht gezeigten - Ablauf des Filtergehäuses 3 abgeführt werden.

Liegt der in Fig. 1 gezeigte Zustand hingegen nicht vor, ist also entweder die Filtereinrichtung 4 nicht in ihrer Filtrierposition im Filtergehäuse 3 angeordnet oder die Ablaufleitung 2 nicht mit ihrem Anschlussstück 6 am Anschlussflansch 15 und damit dem Zulauf 16 des Filtergehäuses 3 platziert, so nimmt das Ventil 9 selbsttätig einen Schaltzustand ein, in welchem der Ventilkörper 10 des Ventils 9 über das Federelement 11 in den Ventilsitz 12 gedrückt und damit der Auslass 8 der Ablaufleitung 2 verschlossen wird. In der Folge kann dann keine Prozessflüssigkeit über das Leitungsende 5 der Ablaufleitung 2 abströmen.

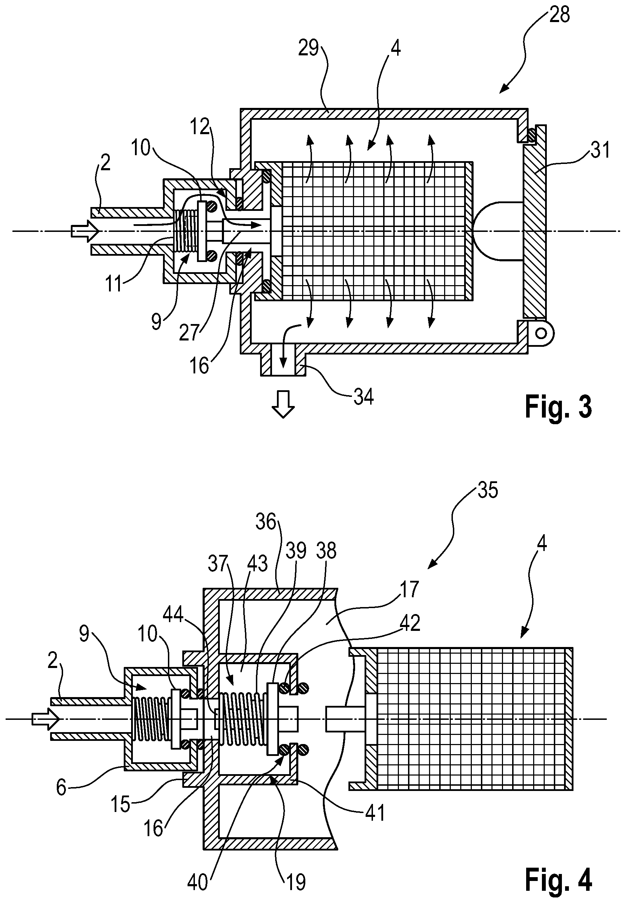

Die Fig. 2 und 3 zeigen schematische Ansichten eines Filtersystems 28, welches entsprechend einer weiteren Ausgestaltungsmöglichkeit der Erfindung ausgebildet ist und weitestgehend der vorhergehenden Variante nach Fig. 1 entspricht. Dabei unterscheidet sich das Filtersystem 28 von dem Filtersystem 1 aus Fig. 1 im Wesentlichen nur dadurch, dass ein Filtergehäuse 29 eine Entnahmeöffnung 30 und einen Deckel 31 aufweist, wobei die Filtereinrichtung 4 in einem in Fig. 2 gezeigten, geöffneten Zustand des Deckels 31 über die Entnahmeöffnung 30 aus dem Innenraum 17 des Filtergehäuses 29 zur Reinigung oder zum Austausch entnommen werden kann. Der Deckel 31 ist zudem auf einer dem Innenraum 17 zugewandten Seite mit einem Betätigungselement 32 in Form eines Nockens 33 versehen, über welchen die Filtereinrichtung 4 beim Schließen des Deckels 31 in ihrer Filtrierposition überführt wird, wie in Fig. 3 gezeigt ist.

In Fig. 2 ist das Filtersystem 28 dabei in einem Zustand gezeigt, in welchem zwar die Ablaufleitung 2 mit ihrem Anschlussstück 6 am Anschlussflansch 15 des Filtergehäuses 29 angeschlossen ist, die Filtereinrichtung 4 aber noch nicht oder nicht vollständig in ihrer Filtrierposition angeordnet ist. Dadurch ist bei dem Ventil 9 in dem einen Schaltzustand der Ventilkörper 10 über das Federelement 11 in den Ventilsitz 12 gedrückt und damit der Auslass 8 verschlossen. In dem nicht geschlossenen Zustand des Deckels 31 sorgt das Federelement 11 dann auch über das Auslöseelement 27 des Filteranschlusses 21 für eine Vorspannung der Filtereinrichtung 4 in Richtung des Deckels 31, wodurch dessen geöffneter Zustand erkennbar ist. Auf der dem Innenraum 17 zugewandten Seite kann der Deckel 31 zudem mit einer Signalfarbe versehen sein, um den geöffneten Zustand optisch besser erfassbar zu machen.

In Fig. 3 ist der Deckel 31 dann vollständig geschlossen, wodurch die Filtereinrichtung 4 über den Nocken 33 in ihrer Filtrierposition überführt und dadurch der Ventilkörper 10 des Ventils 9 über das Auslöseelement 27 aus dem Ventilsitz 12 herausbewegt ist. Dadurch nimmt das Ventil den anderen Schaltzustand ein, in welchem in analoger Weise zu der Variante nach Fig. 1 Prozessflüssigkeit über die Ablaufleitung 2 zum Zulauf 16 des Filtergehäuses 29 geführt und hier über die Filtereinrichtung 4 gefiltert werden kann. Ein Abströmen der gefilterten Prozessflüssigkeit kann dabei dann über einen Ablauf 34 des Filtergehäuses 29 stattfinden. Ansonsten entspricht die Ausführungsform nach den Fig. 2 und 3 der Variante nach Fig. 1, so dass auf das hierzu Beschriebene Bezug genommen wird.

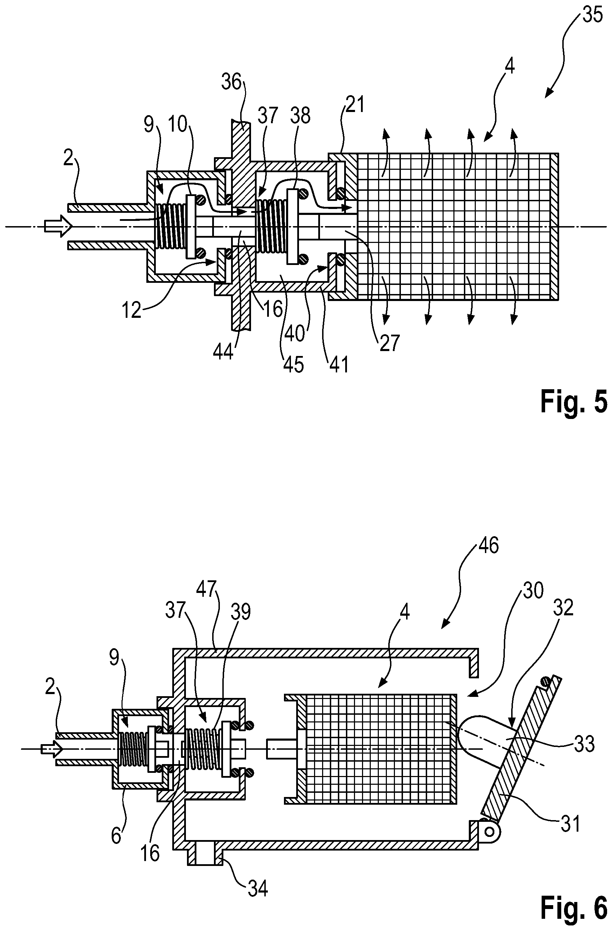

Ferner gehen aus den Fig. 4 und 5 schematische Ansichten eines Filtersystems 35 entsprechend einer weiteren Ausführungsform der Erfindung hervor. Dabei entspricht diese Ausführungsform ebenfalls im Wesentlichen der Variante nach Fig. 1, wobei im Unterschied zu dem Filtersystem 1 aus Fig. 1 bei einem Filtergehäuse 36 des Filtersystems 35 im Innenbereich 19, in welchem der Zulauf 16 mündet, ein weiteres Ventil 37 vorgesehen ist. Dementsprechend ist das Filtergehäuse 36 des Filtersystems 35 am Zulauf mit dem weiteren Ventil 37 ausgestattet. Das Ventil 37 umfasst einen Ventilkörper 38, welcher über ein Federelement 39 gegen einen Ventilsitz 40 vorgespannt ist, wobei der Ventilsitz 40 dabei bei dem Filtergehäuse 36 durch einen Aufnahmeflansch 41 gebildet ist, welcher für eine Aufnahme der Filtereinrichtung 4 vorgesehen ist. An dem Ventilkörper 38 ist zum einen auf einer dem Ventilsitz 40 zugewandt liegenden Seite ein Dichtelement 42 in Form eines O-Rings angeordnet, welcher in dem einen, in Fig. 4 gezeigten Schaltzustand des Ventils 37 durch das Anliegen des Ventilkörpers 38 am Ventilsitz 40 für ein Abdichten eines Ventilraums 43 gegenüber einem restlichen Teil des Innenbereichs 17 des Filtergehäuses 36 sorgt.

In dem in Fig. 4 gezeigten Zustand des Filtersystems 35 ist zwar die Ablaufleitung 2 mit ihrem Anschlussstück 6 an dem Anschlussflansch 15 des Filtergehäuses 36 befestigt, aber die Filtereinrichtung 4 nicht in ihrer Filtrierposition im Filtergehäuse 36 angeordnet. In diesem Zustand befindet sich dann sowohl das Ventil 9, als auch das Ventil 37 jeweils in je einem geschlossenen Schaltzustand, so dass zum einen ein Ausströmen von Prozessflüssigkeit aus der Ablaufleitung 2 verhindert sowie zum anderen auch ein Auslaufen von eventuell noch im Filtergehäuse 36 befindlicher Flüssigkeit über den Zulauf 16 unterbunden ist.

Wird nun aber die Filtereinrichtung 4 mit ihrem Filteranschluss 21 an dem Aufnahmeflansch 41 des Filtergehäuses 36 angeordnet, so sorgt das Auslöseelement 27 für eine Verschiebung des Ventilkörpers 38 des Ventils 37 aus dem Ventilsitz 40, so dass das Ventil 37 einen anderen, einem geöffneten Zustand entsprechenden Schaltzustand einnimmt. Dies ist in Fig. 5 gezeigt. An dem Ventilkörper 38 ist zudem auf einer dem Ventilsitz 40 abgewandt liegenden Seite ein weiteres Auslöseelement 44 befestigt, welches bei der Verschiebung des Ventilkörpers 38 in den anderen Schaltzustand des Ventils 37 mit dem Ventilkörper 10 des Ventils 9 in Kontakt tritt und dadurch auch bei dem Ventil 9 eine Bewegung des Ventilkörpers 10 aus dem Ventilsitz 12 bewirkt. Insofern sind die beiden Ventile 9 und 37 vorliegend derartig hintereinander geschaltet, dass bei Anschluss der Ablaufleitung 2 am Anschlussflansch 15 des Filtergehäuses 36 und bei Platzierung der Filtereinrichtung 4 in der Filtrierposition beide Ventile 9 und 37 gleichzeitig jeweils in ihrem jeweiligen, dem jeweils geöffneten Zustand entsprechenden Schaltzustand überführt werden. Dadurch kann Prozessflüssigkeit aus der Ablaufleitung 2 über den Zulauf 16 in das Filtergehäuse 36 in den Ventilraum 43 einströmen, welcher im geöffneten Zustand des Ventils 37 Teil einer Kammer 45 ist, die zwischen dem Filtergehäuse 36 und der in der Filtrierposition befindlichen Filtereinrichtung 4 begrenzt ist. Aus dieser Kammer 45 findet dann wiederum eine Zuführung der Prozessflüssigkeit zu der Filtereinrichtung 4 statt. Im Übrigen entspricht die Ausführungsform nach den Fig. 4 und 5 der Variante nach Fig. 1, so dass auf das hierzu Beschriebene Bezug genommen wird.

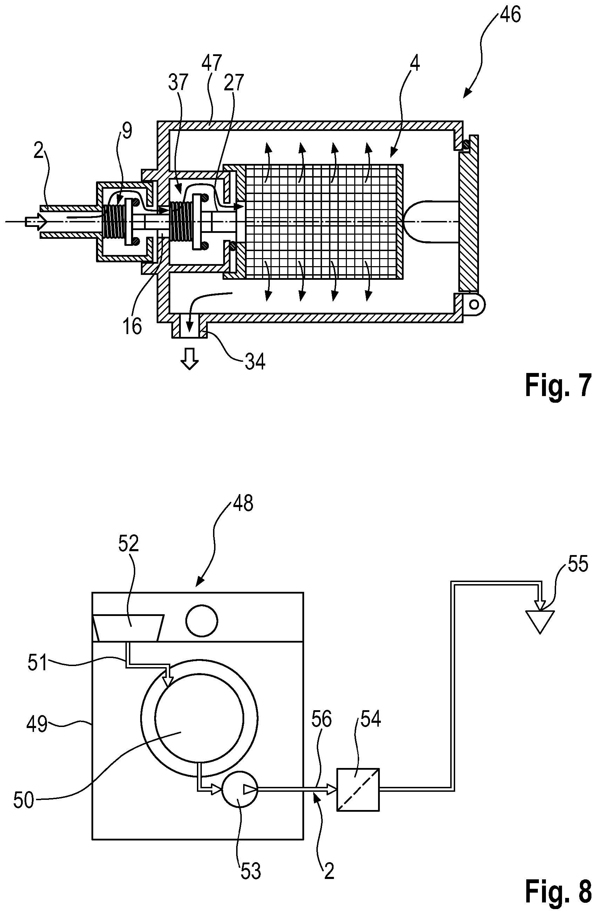

Ferner zeigen die Fig. 6 und 7 schematische Darstellungen eines Filtersystems 46 entsprechend einer weiteren Ausführungsform der Erfindung, wobei diese Ausführungsform dabei eine Kombination der Varianten nach den Fig. 2 bis 5 darstellt. So ist hier zum einen ein Filtergehäuse 47 des Filtersystems 46 mit einem Ablauf 34, einer Entnahmeöffnung 30 und einem Deckel 31 ausgestattet, an welchem ein Betätigungselement 32 in Form eines Nockens 33 ausgestaltet ist, wobei dieser Nocken 33 im geschlossenen Zustand des Deckels 31 für eine Überführung der im Filtergehäuse 47 aufgenommenen Filtereinrichtung 4 in ihrer Filtrierposition sorgt. Zum anderen ist neben dem Ventil 9 am Anschlussstück 6 der Ablaufleitung 2 noch ein weiteres Ventil 37 am Zulauf 16 des Filtergehäuses 47 vorgesehen. Hinsichtlich der weiteren möglichen Ausgestaltung des Deckels 31 sowie auch hinsichtlich des Aufbaus und der Wirkweise des weiteren Ventils 37 sowie dessen Zusammenspiel mit dem Auslöseelement 27 und dem Ventil 9 wird auf das zu den Fig. 2 bis 5 Beschriebene Bezug genommen.

Des Weiteren geht aus Fig. 8 eine schematische Ansicht eines erfindungsgemäßen Wäschebehandlungsgeräts 48 hervor, bei welchem es sich vorliegend um eine Waschmaschine oder einen Waschtrockner handelt. Das Wäschebehandlungsgerät 48 umfasst ein Gerätegehäuse 49, in welchem eine Trommel 50 drehbar gelagert aufgenommen ist. Die Trommel 50 dient bei dem Wäschebehandlungsgerät 48 der Aufnahme von zu behandelnden Wäschestücken, wobei der Trommel 50 für eine Behandlung eingebrachter Wäschestücke Prozessflüssigkeit über eine Zulaufleitung 51 zugeleitet werden kann. Dazu ist über die Zulaufleitung 51 eine Verbindung der Trommel 50 zu einer Einspülschale 52 hergestellt, in welcher zugeführtes Wasser mit Waschmittel oder Waschhilfsmittel versetzt werden kann, bevor über die Zulaufleitung 51 eine Zuführung der somit gebildeten Prozessflüssigkeit zu der Trommel 50 erfolgt. Insofern kann es sich bei der der Trommel 50 zugeführten Prozessflüssigkeit neben Wasser auch insbesondere um Waschlauge handeln.

Zum Ende eines Prozessschritts bzw. der Wäschebehandlung kann die Prozessflüssigkeit aus der Trommel 50 abgeführt werden, wobei dieses Abführen dabei über eine Pumpe 53 vorgenommen wird, über welche die abzuführende Prozessflüssigkeit zu einem Filtersystem 54 gefördert wird. Dieses Filtersystem 54 entspricht dabei einer der vorhergehenden Variante nach den Fig. 1 bis 7 und ist außerhalb des Gerätegehäuses 49 platziert, wobei über das Filtersystem hierbei ein Filtern der abgepumpten Prozessflüssigkeit realisiert werden kann, bevor die Prozessflüssigkeit im Weiteren einem Abwasseranschluss 55 eines Abwassersystems zugeführt wird. Die Zuführung zum Filtersystem 54 erfolgt dabei über die Ablaufleitung 2, die hierzu vorliegend als Abpumpschlauch 56 gestaltet ist.

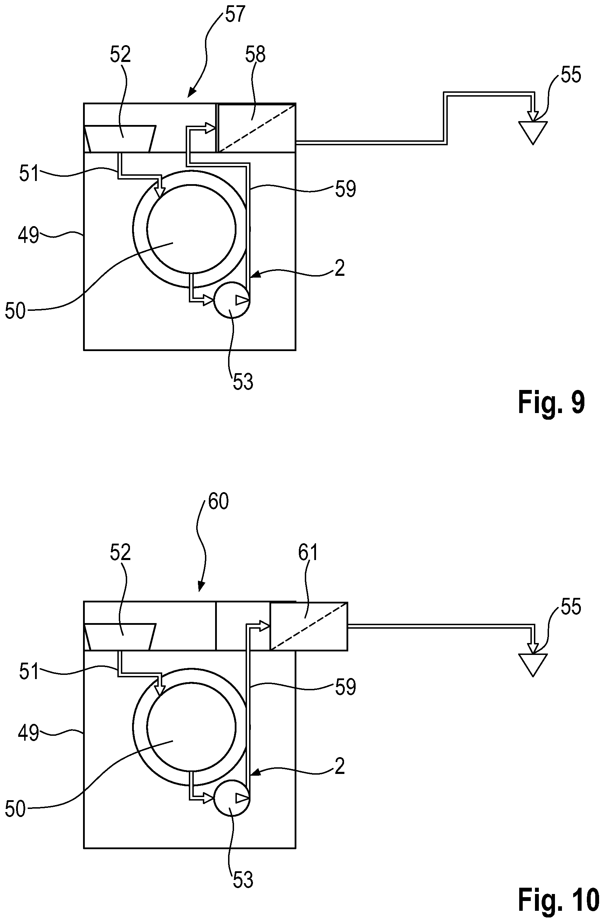

Des Weiteren geht noch aus Fig. 9 eine schematische Darstellung eines erfindungsgemäßen Wäschebehandlungsgerät 57 hervor, wobei dieses hierbei im Wesentlichen dem Wäschebehandlungsgerät aus Fig. 8 entspricht. Unterschiedlich ist hierbei aber, dass nun ein Filtersystem 58 mit in das Gerätegehäuse 49 integriert ist, wobei das Filtersystem 58 hierbei erneut einer der Variante nach den Fig. 1 bis 7 entspricht. Die Ablaufleitung 2 ist hierbei dann als im Gerätegehäuse 49 liegende Abpumpleitung 59 gestaltet.

Schließlich zeigt noch Fig. 10 ein Wäschebehandlungsgerät 60 gemäß einer weiteren Variante der Erfindung wobei dieses Wäschebehandlungsgerät 60 hierbei im Wesentlichen der vorhergehenden Variante nach Fig. 9 entspricht. Unterschiedlich ist dabei, dass ein Filtersystem 61, welches hierbei nach einer der Varianten nach den Fig. 1 bis 7 ausgestaltet ist, teilweise innerhalb des Gerätegehäuses 49 sowie teilweise außerhalb des Gerätegehäuses 49 platziert ist. Hierbei liegt insbesondere die als Abpumpleitung 59 ausgestaltete Ablaufleitung 2 innerhalb des Gerätegehäuses 49, wobei das Anschlussstück 6 der Ablaufleitung 2 dann eine Schnittstelle zur Außenseite des Gerätegehäuses 49 bildet. An dieser Schnittstelle kann dann bei dem Filtersystem 61 das Filtergehäuse mit dem Filterelement entsprechend angeschlossen werden.

Bei den erfindungsgemäßen Varianten eines Filtersystems kann das oder können die Ventile auch abweichend gestaltet sein. So können alternative Ausgestaltungen eines jeweiligen Ventilkörpers realisiert werden oder auch Ventile mit einem anderen Aufbau Anwendung finden, wie beispielsweise Schieberventile.

Mittels der erfindungsgemäßen Ausgestaltungen eines Filtersystems kann eine permanent sachgerechte Verwendung des Filtersystems sichergestellt werden.

### Bezugszeichenliste:

- 1: Filtersystem
- 2: Ablaufleitung
- 3: Filtergehäuse
- 4: Filtereinrichtung
- 5: Leitungsende
- 6: Anschlussstück
- 7: Ventilraum
- 8: Auslass
- 9: Ventil
- 10: Ventilkörper
- 11: Federelement
- 12: Ventilsitz
- 13: Dichtelement
- 14: Anschlussabschnitt
- 15: Anschlussflansch
- 16: Zulauf
- 17: Innenraum
- 18: Dichtelement
- 19: Innenbereich
- 20: Aufnahmeflansch
- 21: Filteranschluss
- 22: Einströmseite
- 23: Filterelement
- 24: Dichtelement
- 25: Kammer
- 26: Kammer
- 27: Auslöseelement
- 28: Filtersystem
- 29: Filtergehäuse
- 30: Entnahmeöffnung
- 31: Deckel
- 32: Betätigungselement
- 33: Nocken
- 34: Ablauf
- 35: Filtersystem
- 36: Filtergehäuse
- 37: Ventil
- 38: Ventilkörper
- 39: Federelement
- 40: Ventilsitz
- 41: Aufnahmeflansch
- 42: Dichtelement
- 43: Ventilraum
- 44: Auslöseelement
- 45: Kammer
- 46: Filtersystem
- 47: Filtergehäuse
- 48: Wäschebehandlungsgerät
- 49: Gerätegehäuse
- 50: Trommel
- 51: Zulaufleitung
- 52: Einspülschale
- 53: Pumpe
- 54: Filtersystem
- 55: Abwasseranschluss
- 56: Abpumpschlauch
- 57: Wäschebehandlungsgerät
- 58: Filtersystem
- 59: Abpumpleitung
- 60: Wäschebehandlungsgerät
- 61: Filtersystem

## Patentansprüche

1. Filtersystem (1; 28; 35; 46; 54; 58; 61) eines Wäschebehandlungsgeräts (48; 57; 60), umfassend eine Ablaufleitung (2), welche für ein Abführen von Prozessflüssigkeit aus dem Wäschebehandlungsgerät (48; 57; 60) vorgesehen ist, eine Filtereinrichtung (4) und ein Filtergehäuse (3; 29; 36; 47), in welchem die Filtereinrichtung (4) in einer Filtrierposition lösbar platzierbar ist und das einen Zulauf (16) aufweist, wobei der Zulauf (16) in einem Innenbereich (19) mündet, in welchem das Filtergehäuse (3; 29; 36; 47) und die Filtereinrichtung (4) bei Platzierung der Filtereinrichtung (4) in ihrer Filtrierposition eine zwischenliegende Kammer (25; 45) einschließen, und wobei in der Kammer (25; 45) bei Platzierung der Filtereinrichtung (4) in ihrer Filtrierposition dann zudem eine Einströmseite (22) der Filtereinrichtung (4) mündet, **dadurch gekennzeichnet, dass** die Ablaufleitung (2) mit einem Leitungsende (5) lösbar an dem Zulauf (16) des Filtergehäuses (3; 29; 36; 47) anschließbar ist, und dass an dem Leitungsende (5) ein Ventil (9) untrennbar vorgesehen ist, welches in einem Zustand, in welchem das Leitungsende (5) an dem Zulauf (16) angeschlossen und gleichzeitig die Filtereinrichtung (4) in der Filtrierposition platziert ist, in einen ersten Schaltzustand überführt ist, in welchem ein Strömen von Prozessflüssigkeit aus dem Leitungsende (5) über das Ventil (9) zu dem Zulauf (16) darstellbar ist, und dass das Ventil (9) bei fehlendem Vorliegen dieses Zustands selbsttätig einen zweiten Schaltzustand einnimmt, in dem ein Strömen von Prozessflüssigkeit aus dem Leitungsende (5) über das Ventil (9) unterbunden ist.

2. Filtersystem (1; 28; 35; 46; 54; 58; 61) nach Anspruch 1, **dadurch gekennzeichnet, dass** dem am Leitungsende (5) vorgesehenen Ventil (9) ein Auslöseelement (27) zugeordnet ist, welches an der Filtereinrichtung (4) vorgesehen ist, wobei das Auslöseelement (27) bei Anschluss des Leitungsendes (5) an dem Zulauf (16) und bei gleichzeitiger Platzierung der Filtereinrichtung (4) in der Filtrierposition unmittelbar oder mittelbar auf das Ventil (9) einwirkt und das Ventil (9) dabei aus dem zweiten Schaltzustand in den ersten Schaltzustand überführt.

3. Filtersystem (35; 46; 54; 58; 61) nach Anspruch 1 oder 2, **dadurch gekennzeichnet, dass** an dem Zulauf (16) ein weiteres Ventil (37) vorgesehen ist, welches bei Platzierung der Filtereinrichtung (4) in der Filtrierposition in einen Schaltzustand überführt ist, in welchem ein Strömen von Prozessflüssigkeit über den Zulauf (16) darstellbar ist, wohingegen das weitere Ventil (37) bei fehlender Platzierung der Filtereinrichtung (4) in der Filtrierposition selbsttätig einen zweiten Schaltzustand einnimmt, in dem ein Strömen von Prozessflüssigkeit über den Zulauf (16) über das weitere Ventil (37) unterbunden ist.

4. Filtersystem (35; 46; 54; 58; 61) nach den Ansprüchen 2 und 3, **dadurch gekennzeichnet, dass** das an der Filtereinrichtung (4) vorgesehene Auslöseelement (27) bei Platzierung der Filtereinrichtung (4) in der Filtrierposition mit dem weiteren Ventil (37) in Kontakt tritt und das weitere Ventil (37) hierdurch aus seinem zweiten Schaltzustand in seinen ersten Schaltzustand überführt, wobei das weitere Ventil (37) mit einem weiteren Auslöseelement (44) verbunden ist, welches bei Überführung des weiteren Ventils (37) in seinen ersten Schaltzustand und bei Anschluss des Leitungsendes (5) der Ablaufleitung (2) an dem Zulauf (16) mit dem am Leitungsende (5) vorgesehenen Ventil (9) in Kontakt tritt und das am Leitungsende (5) vorgesehene Ventil (9) aus seinem zweiten Schaltzustand in seinen ersten Schaltzustand überführt.

5. Filtersystem (28; 46; 54; 58; 61) nach einem der vorhergehenden Ansprüche, **dadurch gekennzeichnet, dass** das Filtergehäuse (29; 47) mit einem Deckel (31) versehen ist, welcher mit mindestens einem Betätigungselement (32) ausgestattet und zwischen einem geöffneten Zustand und einer Schließstellung überführbar ist, wobei die Filtereinrichtung (4) bei Anordnung innerhalb des Filtergehäuses (29; 47) über den Deckel (31) nur bei dessen Platzierung in der Schließstellung durch das mindestens eine Betätigungselement (32) des Deckels (31) in die Filtrierposition bewegt ist.

6. Filtersystem (28; 46; 54; 58; 61) nach Anspruch 5, **dadurch gekennzeichnet, dass** die Filtereinrichtung (4) bei Anordnung innerhalb des Filtergehäuses (29; 47) über mindestens ein Federelement (11; 39) in Richtung des Deckels (31) vorgespannt ist.

7. Filtersystem (28; 46; 54; 58; 61) nach Anspruch 5 oder 6, **dadurch gekennzeichnet, dass** das mindestens eine Betätigungselement (32) als je ein Nocken (33) ausgeführt ist, welcher jeweils gegenüber dem restlichen Deckel (31) in der Schließstellung in Richtung eines Innenraums (17) des Filtergehäuses (29; 47) vorsteht.

8. Filtersystem (28; 46; 54; 58; 61) nach einem der Ansprüche 5 bis 7, **dadurch gekennzeichnet, dass** eine einem Innenraum (17) des Filtergehäuses (29; 47) in der Schließstellung zugewandte Seite des Deckels (31) optisch auffällig gestaltet, insbesondere mit einer Signalfarbe versehen ist.

9. Filtersystem (58) nach einem der vorhergehenden Ansprüche, **dadurch gekennzeichnet, dass** das Filtergehäuse in einem Gerätegehäuse (49) des Wäschebehandlungsgeräts (57) aufgenommen und die Ablaufleitung (2) eine Abpumpleitung (59) des Wäschebehandlungsgeräts (57) ist.

10. Filtersystem (54; 61) nach einem der Ansprüche 1 bis 8, **dadurch gekennzeichnet, dass** das Filtergehäuse außenliegend zu einem Gerätegehäuse (49) des Wäschebehandlungsgeräts (48; 60) angeordnet und die Ablaufleitung (2) ein außerhalb des Gerätegehäuses (49) verlaufender Abpumpschlauch (56) oder eine innerhalb des Gerätegehäuses (49) vorgesehene Abpumpleitung (59) des Wäschebehandlungsgeräts (60) ist.

11. Wäschebehandlungsgerät (48; 57; 60), insbesondere Waschmaschine oder Waschtrockner, umfassend ein Filtersystem (1; 28; 35; 46; 54; 58; 61) nach einem oder mehreren der Ansprüche 1 bis 10.
